# EUROPEAN PATENT SPECIFICATION

(11) **EP 0 429 548 B1**
(45) Date of publication and mention of the grant of the patent: **04.09.1996**
(21) Application number: 89911964.8
(22) Date of filing: 19.06.1989
(51) Int. Cl.: C01F 7/14, C01F 7/44, C01F 1/00, C01F 7/00, C01F 7/02, C04B 35/10, B01J 20/00

(54) **SMALL SIZED ALPHA ALUMINA PARTICLES AND PLATELETS**
KLEINE PARTIKEL UND PLÄTTCHEN VON ALPHA-ALUMINIUMOXYD
PETITES PARTICULES ET PLAQUETTES D'ALUMINIUM ALPHA

(43) Date of publication of application: 05.06.1991
(73) Proprietor: ALUMINUM COMPANY OF AMERICA, Pittsburgh, PA 15219 (US)
(72) Inventor: SUCECH, Steven, W., Lake Villa, IL 60046 (US); MARHANKA, John, E., Benton, AR 72015 (US); PEARSON, Alan, Murrysville, PA 15668 (US)
(74) Representative: Baillie, Iain Cameron
(86) International application number: PCT/US89/02659
(87) International publication number: WO 90/15777

(56) References cited:
- EP-A- 0 121 043
- EP-A- 0 168 606
- EP-A- 0 271 104
- US-A- 3 838 980
- US-A- 3 899 568
- US-A- 4 019 914
- US-A- 4 051 222
- US-A- 4 175 118
- US-A- 4 568 527
- US-A- 4 585 645
- US-A- 4 595 581
- US-A- 4 595 665
- US-A- 4 657 754
- US-A- 4 666 687
- US-A- 4 847 064
- PATENT ABSTRACTS OF JAPAN vol. 12, no. 096 (C-484)March 29, 1988
- Journal of the American Ceramic Society, Vol. 68(9), September 1985, YOSHIKO SUWA; "Lowering Crystallization Temperatures by Seeding in Structurally Diphasic A12O3-Mg0 Xerogels" pages 238-239.
- Journal of the American Ceramic Society, Vol 68(9), September 1985, MASATO KUMAGAI et al, "Controlled Transformation and Sintering of a Boehmite Sol-Gel by alpha-Alumina Seeding" pages 500-505.
- LUSSKY, "Experience with Operation of the Alcoa Fluid Flash Calciner", 1980, pp 69-79
- Oxides and Hydroxides of Aluminum Alcoa Technical Paper No. 19, Revised, KARL WEFERS et al 1987 pages 36-39.
- Chemical Week 36, June 1977 "Conoco's Shift to Water Upgrades Outputs", pages 35-36.
- The Aluminum Industry, EDWARDS et al, McGraw-Hill Book Company Ny, Ny, 1930, pages 164-167

## Description

The present invention relates to alpha alumina particles and platelets of small particle size and to processes for their production. As used herein, the term "platelets" refers to particles having a plate-like or tabular shape. Alpha alumina particles and platelets are useful as ceramic and abrasive materials.

Alpha alumina particles having average particle sizes of less than about 1.5 microns are known in the prior art. It is also known that alpha alumina particles can be made with a plate-like or tabular shape, in particle sizes greater than about 2 microns. However, alpha alumina particles having both plate-like shape and particle sizes below about 1.5 microns are heretofore unknown. As used herein with reference to platelets, the term "particle size" refers to the size of a largest dimension.

It is a principal objective of the present invention to provide alpha alumina particles having a plate-like shape with an average particle size below about 1.5 microns.

A related objective of the present invention is to provide an economical process for production of alpha alumina particles of the type described, which process avoids formation of boehmite gel at an intermediate stage.

Additional objectives and advantages of the present invention will become apparent to persons skilled in the art from the following specification and claims.

"Patent Abstracts of Japan", Vol. 12, No 096, 29 March 1988 discloses producing fine alumina powder by adding alpha alumina seed powder to an alkali aluminate solution to precipitate aluminum hydroxide which is covered and calcined to yield alumina powder. In the present invention the addition of promoter particles and of a mineralizer results in the production of particles having a plate-like shape.

According to the present invention, there is provided an economical process for producing particles of alpha alumina having a plate-like shape, comprising the steps of:
(a) providing an aqueous aluminate solution containing 50-400 g/l caustic soda and 0.50-0.80 grams Al₂O₃ per gram of caustic soda;
(b) treating the aqueous aluminate solution with alumina hydrate seed material and a promoter comprising particles of alpha alumina thereby to precipitate from the aqueous aluminate solution alumina hydrate particles containing the promoter particles, the alumina hydrate particles comprising agglomerated crystals, the agglomerates having a diameter such that they may be comminuted by grinding to an average particle size of less than one micron;
(c) separating the precipitated alumina hydrate particles from the aqueous aluminate solution;
(d) drying said alumina hydrate particles; and
(e) calcining said alumina hydrate particles in the presence of a chlorine or fluoride, chloride or boron-containing mineralizer to produce particles comprising predominantly alpha alumina.

Also provided according to the present invention is a process for producing particles of alpha alumina having a plate-like shape, said process comprising the steps of:
(f) providing an aqueous aluminate solution containing 50-400 g/l caustic soda and 0.50-0.80 grams Al₂O₃ per gram of caustic soda;
(g) treating the aqueous aluminate solution at a temperature of 40-100°C with alumina hydrate seed material and a promoter comprising particles of alpha alumina promoter having an average particle size of less than 1 micron, thereby to precipitate from the aqueous aluminate solution alumina hydrate particles containing the alpha alumina promoter;
(h) separating the precipitated alumina hydrate particles from the aqueous aluminate solution;
(i) drying said alumina hydrate particles; and
(j) calcining said alumina hydrate particles in the presence of a mineralizer selected from the group consisting of boric oxide, boric acid, aluminum fluoride, aluminum chloride, ammonium fluoride, ammonium chloride, chlorine, hydrochloric acid, and mixtures thereof, thereby producing alpha alumina particles having a plate-like shape.

Further provided according to the present invention is an economical process for producing particles of alpha alumina having a plate-like shape, comprising the steps of:
(k) providing an aqueous aluminate solution containing 50-400 g/l caustic soda and 0.50-0.80 grams Al₂O₃ per gram of caustic soda;
(l) treating the aqueous aluminate solution with alumina hydrate seed material and a promoter comprising particles of alpha alumina, thereby to precipitate from the aqueous aluminate solution alumina hydrate particles containing the alpha alumina promoter;
(m) separating the precipitated alumina hydrate particles from the aqueous aluminate solution;
(n) drying said alumina hydrate particles; and
(o) calcining said alumina hydrate particles in the presence of a chlorine- or fluoride-, chloride- or boron-containing mineralizer to produce particles comprising predominantly alpha alumina.

The present invention also provides alpha alumina particles having a plate-like shape and an average size of less than 1.5 micron.

The present invention further provides alumina hydrate particles having a plate-like shape containing a promoter comprising particles of alpha alumina, said alumina hydrate particles comprising agglomerated crystals, the agglomerates having a diameter such that they may be comminuted by grinding to an average particle size of less than 1 µm.

The principal starting material for the process of the present invention is an aqueous aluminate solution, such as the solution obtained from the Bayer process. The aluminate solution contains 50-400 g/l caustic soda (expressed as Na₂CO₃) and 0.50-0.80 grams Al₂O₃ per gram of caustic soda (expressed as Na₂CO₃). The term "caustic soda" as used herein refers to sodium hydroxide. The aluminate solution preferably has a caustic soda content of about 140-240 g/l (expressed as Na₂CO₃). The solution also preferably contains about 0.60-0.70 grams Al₂O₃ per gram of caustic soda (expressed as Na₂CO₃). Initial temperature of the solution is 20-100°C.

The aluminate solution is treated with alumina hydrate seed material and particles of an alpha alumina promoter, thereby to precipitate alumina hydrate particles containing the promoter. Preferably, the solution is also cooled as the seed material and promoter are added. The promoter preferably comprises about 0.01-10 wt% of the Al₂O₃ content in the precipitate, more preferably about 0.01-5 wt% and most preferably about 0.01-1 wt%. Average particle size of the promoter particles is generally less than 1 micron.

The seed material preferably comprises particles of alumina trihydrate. The alumina trihydrate seed material may be gibbsite, bayerite or mixtures thereof. More preferably, the seed material comprises predominantly gibbsite.

Precipitated alumina hydrate particles containing the promoter are separated from the aluminate solution, dried, and calcined at an elevated temperature of about 900-1500°C to produce particles comprising predominantly alpha alumina. The alpha alumina particles produced preferably have an average crystallite size of less than 1 micron. If the alpha alumina particles are agglomerated, they may be comminuted by grinding to an average particle size of less than 1 micron.

As used herein, the term "alumina hydrate" refers to Al₂O₃·xH₂O, where x varies from 1 to 3; in other words, the water of hydration varies between 15 and 34.6% by weight of the alumina hydrate as determined by calcination. The expression "alumina trihydrate" refers to Al₂O₃·3H₂O or Al(OH)₃, also called "aluminum hydroxide". The terms "gibbsite" and "bayerite" refer to different crystalline forms of alumina trihydrate.

Alpha alumina particles produced by the claimed process are useful for making sintered ceramic shapes. The alpha alumina particles are pressed into a green shape and then the green shape is sintered at an elevated temperature of about 1250-1500°C. A sintering temperature of about 1400°C is preferred. The sintered ceramic shapes are characterized by high bulk density and relatively small grain size.

In a particularly preferred process of the invention, dried alumina hydrate particles containing the promoter are calcined together with a mineralizer to produce plate-like particles or platelets having an average maximum dimension of less than 1.5 microns, preferably less than about 1 micron. Some preferred mineralizers are fluorides, chlorides, chlorine, and certain boron compounds. Two preferred fluorides are aluminum fluoride and ammonium fluoride. Three preferred chlorides are aluminum chloride, ammonium chloride, and hydrochloric acid. Some suitable boron compounds are boric acid, boric oxide, sodium borate, and sodium fluoroborate. Aluminum fluoride is particularly preferred because it is effective and adds no other impurities to the product.

The temperature of calcination is generally about 900-1500°C, preferably about 1200-1400°C. A suitable product is obtained at a 1300°C calcination temperature. The mineralizer is generally added to the alumina hydrate in an amount equal to about 0.15-2 wt% of the alumina hydrate, preferably about 0.15-1 wt%. About 0.25 wt% aluminium fluoride is utilized in a particularly preferred embodiment.

Figures 1 and 3-5 are graphs showing the size distribution of alpha alumina particles made in accordance with the prior art and in accordance with the present invention.

Figure 2 is a graph showing the size distribution of alpha alumina promoter particles used in practicing the present invention.

Figure 6 is a flow sheet diagram of a particularly preferred process.

Figure 7 is an electron microphotograph of alpha alumina particles made in accordance with the present invention.

Figure 8 is an electron microphotograph of alpha alumina particles made by calcining alumina hydrate particles without any mineralizer.

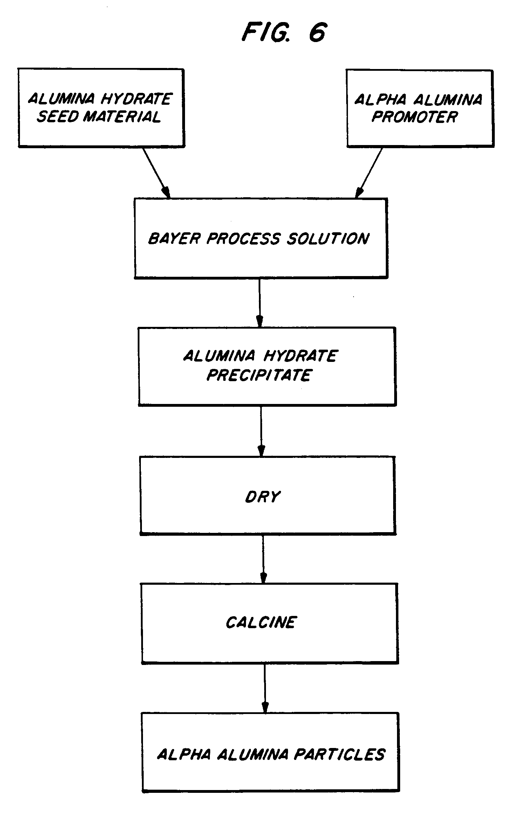

In accordance with the present invention, alpha alumina promoter particles are added to a Bayer process sodium aluminate solution along with alumina hydrate seed material, thereby to precipitate alumina hydrate particles containing the promoter. A flow sheet diagram of the entire process is shown in Figure 6. The following examples demonstrate some advantages of such promoter particle addition in the precipitation step.

### Grinding Conditions

The ACMA (American Ceramic Manufacturer's Association) standard dry grinding procedure was used in this work. This consists of a 5 L ceramic jar mill rotating at 62 rpm with 4 kg of nominally 2.54 cm (1 in.) high alumina balls and 125 g of powder. Different grinding times were used so the change in particle size distribution could be followed with time and be used as an indication of ease of grinding.

### Example 1 (Comparative)

This Example shows calcination and grinding behavior of an alumina hydrate sample precipitated without addition of alpha alumina promoter particles. The precipitation was conducted by adding 2 g/l of gibbsite seed material having about 1 micron average particle size to a sodium aluminate solution containing approximately 95 g/l Al₂O₃ and 150 g/l caustic soda (expressed as sodium carbonate equivalent). A preferred gibbsite seed material is sold by Aluminum Company of America under the trademark HYDRAL 710.

The suspension was agitated and held at 85°C for 4 hours, then at 65°C for 20 hours, and finally at 45°C for 24 hours. These time/temperature conditions were chosen to simulate commercial production of chemical grade gibbsite having low sodium content. The precipitated particles were removed by filtration, then washed and dried. Approximately 100 g/l gibbsite was recovered. The product was composed of agglomerates (4 micron median diameter) of smaller (1-2 micron average diameter) gibbsite crystals with 0.04 wt% Na₂O content.

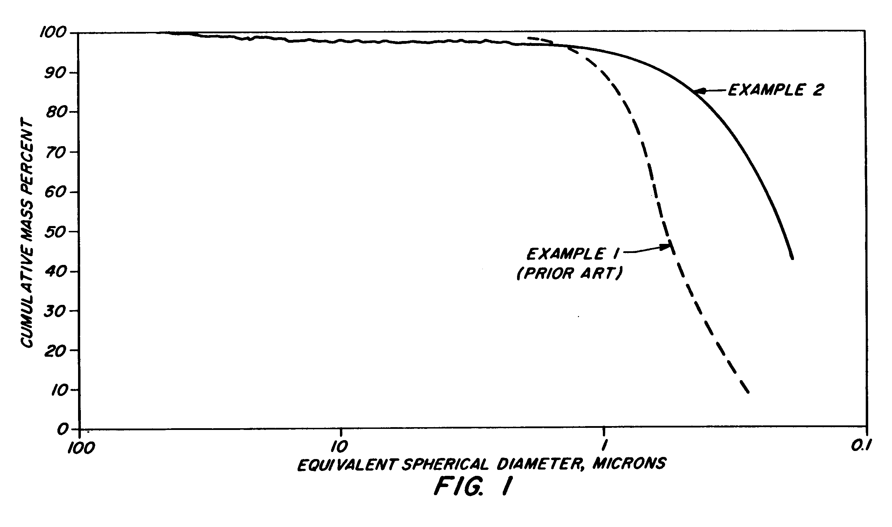

The gibbsite material was calcined by heating for 2 hours at 1200°C and then ball milled for 16 hours. Particle size distribution of the ground product (measured by Micromeritics Sedigraph) is shown in Figure 1. It can be seen that the median particle size is about 0.6 microns with about 90% of the particles below 1 micron.

### Example 2

This Example shows the effect of fine particle size alpha alumina promoter addition during precipitation of the gibbsite.

A batch of gibbsite particles was precipitated using 1 g/l of 0.25 micron average particle size gibbsite as precipitation seed material. Sodium aluminate liquor composition was essentially the same as in Example 1, but precipitation was begun at a temperature of 90°C and the suspension was allowed to cool naturally. Time/temperature history of the precipitation step was as follows:

| Time After Seed Addition (Hours) | Temperature (°C) |
|---|---|
| 0 | 90 |
| 4 | 85 |
| 45 | 60 |
| 125 | 48 |
| 144 | 41 |

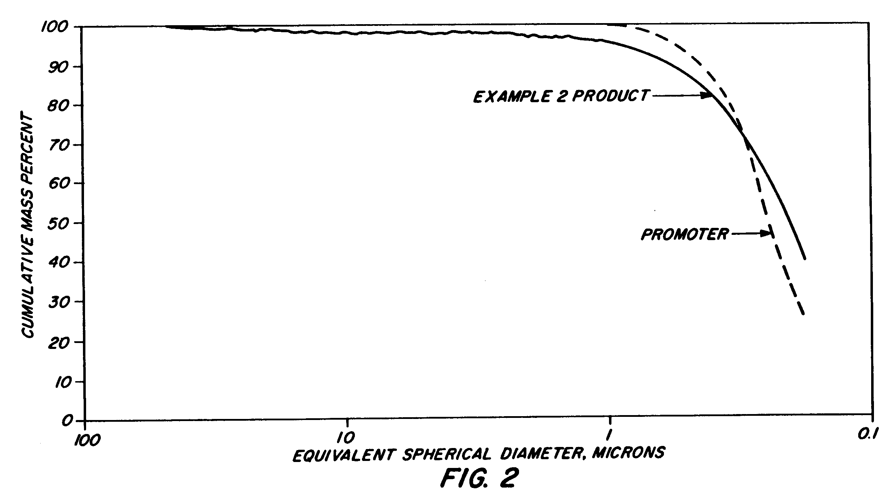

During precipitation, 0.6 g/l of alpha alumina promoter particles having the size distribution shown in Figure 2 were added stepwise to the slurry. The alpha alumina addition was 0.3 g/l at the beginning of precipitation, 0.15 g/l after 4 hours, and 0.15 g/l after 24 hours. This sequence was chosen in an attempt to distribute the promoter particles uniformly among the precipitating alumina particles. Gibbsite yield and Na₂O content were similar to the product of Example 1. The gibbsite product was composed of 25 micron agglomerates with crystal sizes of about 2-5 microns.

This material was calcined for 2 hours at 1200°C, then ground by the procedure of Example 1 but for only 4 hours. Particle distribution of the ground product is shown in Figure 1. It can be seen that the ground product of Example 2 is much finer than that of Example 1 in spite of the fact it was ground for a shorter period of time. Approximately 95% of the Example 2 product is below 1 micron particle size.

Figure 2 shows a comparison between particle size distribution of the promoter particles and particle size distribution of alpha alumina produced in Example 2. Surprisingly, the Example 2 product has a higher proportion of particles in the size range below about 0.25 microns than the promoter particles.

### Example 3

This Example shows the effect of changing amounts of promoter particles on the gibbsite precipitation. In all of the tests in this Example, precipitations were made with sodium aluminate liquors having approximately the same composition and under the same time/temperature conditions as described in Example 1. The precipitation seed material was a mixture of gibbsite and bayerite particles having about 0.1 micron median particle size, and a seed charge of 1 g/l was used in each test. The amount of alpha alumina promoter used in these tests was varied in the range 0-5 wt% (based on Al₂O₃ content in the precipitated product). The alpha alumina promoter had the same particle size distribution as in Example 2, and it was charged incrementally, 40% at the beginning of precipitation, 40% after 4 hours, and 20% after 24 hours. After precipitation, the gibbsite particles were filtered, washed, and dried. In these tests, the washing was not as thorough as in Examples 1 and 2 and consequently, the residual Na₂O content was somewhat higher than in those Examples. The precipitated products in Example 3 were agglomerates of 0.5-1.0 micron gibbsite crystals.

Each product was calcined for 2 hours at 1100-1250°C and surface area and alpha alumina content were determined for each calcination condition. These data are shown in Table I.

**Table I**

| Calcined Properties of Gibbsite/Alpha Alumina Product | | | | | | | | | |
|---|---|---|---|---|---|---|---|---|---|
| Alpha Alumina Promoter Added (wt%)* | Calcined Properties (After 2 hour Calcination at Indicated Temperature) | | | | | | | | |
| | Na₂O (wt%) | Surface Area (m²/g) | | | | Alpha Alumina Content (wt%) | | | |
| | | 1100°C | 1150°C | 1200°C | 1250°C | 1100°C | 1150°C | 1200°C | 1250°C |
| 0 | 0.14 | 22 | 20 | 12 | 7 | 5 | 36 | 64 | 91 |
| 0.01 | 0.13 | 14 | 10 | 8 | 7 | 70 | 90 | 94 | 96 |
| 0.05 | 0.10 | 12 | 10 | 9 | 7 | 90 | 93 | 94 | 95 |
| 0.20 | 0.21 | 12 | 11 | 10 | 8 | 88 | 91 | 91 | 94 |
| 1.00 | 0.21 | 11 | 11 | 6 | 7 | 94 | 95 | 97 | 96 |
| 5.00 | 0.34 | 14 | 13 | 10 | 7 | 83 | 83 | 88 | 83 |

| | | | | | | | | | |
|---|---|---|---|---|---|---|---|---|---|
| *Based on Al₂O₃ content of the precipitate. | | | | | | | | | |

Because of the residual Na₂O content in these samples, anything above 90 wt% alpha alumina is considered fully converted. It can be seen that without promoter addition, a calcination temperature of 1250°C was required for full conversion to alpha alumina. This is a higher temperature than found necessary in the tests of Example 1, probably because of the higher content of Na₂O which is known to retard transformation to alpha alumina.

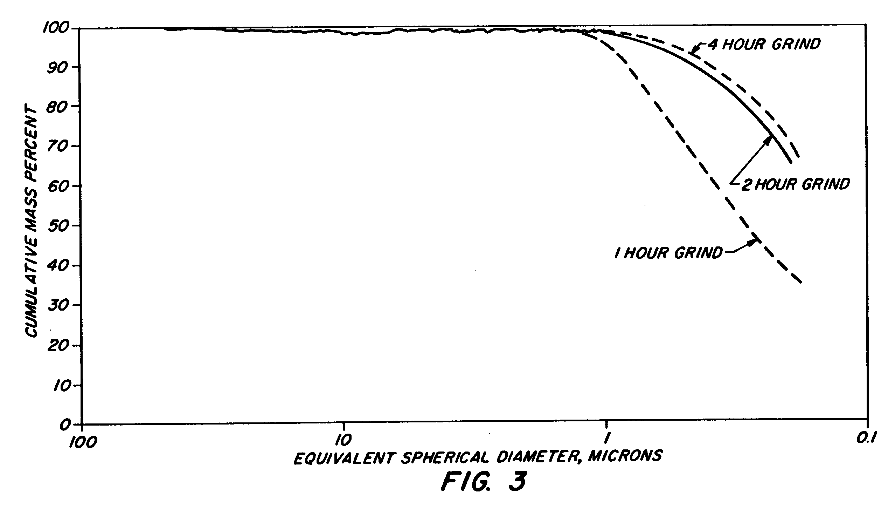

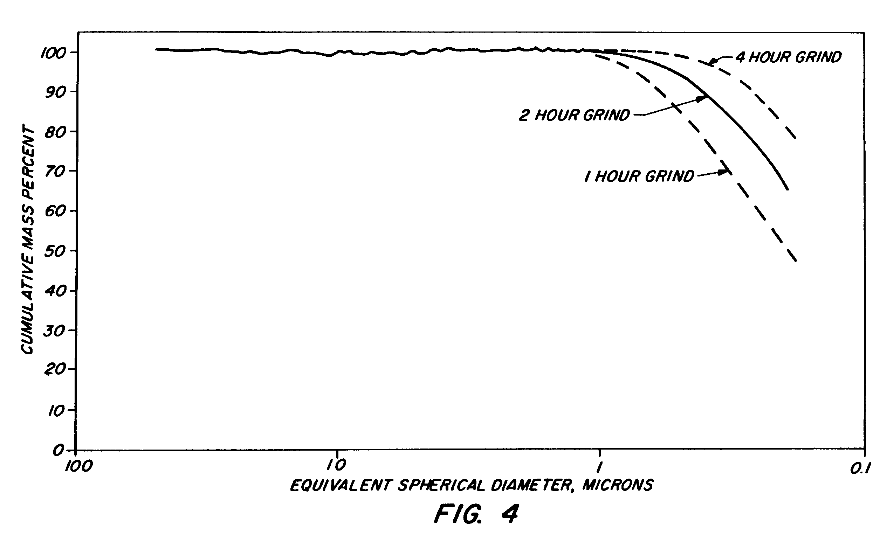

When as little as 0.01 wt% promoter was present, the alpha transformation temperature was reduced significantly. The data also show that by calcination at lower temperatures, higher surface area (finer crystal size) products are attained. Figures 3 and 4 show particle size data for some of these materials after dry grinding for 1-4 hours under the same conditions as in Example 1. The particle sizes shown in Figure 3 were obtained from alumina precipitated by addition of 0.05 wt% alpha alumina promoter particles to the gibbsite seed material. The particle sizes in Figure 4 were obtained on alumina precipitated by addition of 1.0 wt% alpha alumina promoter particles to the gibbsite seed material. In both cases, the precipitates were calcined at 1125°C. The samples calcined after promoter addition are extremely easy to grind and median sizes below the range of Sedigraph detection (0.2 micron) were attained. Also, these samples contain little or no material above 1 micron average particle size.

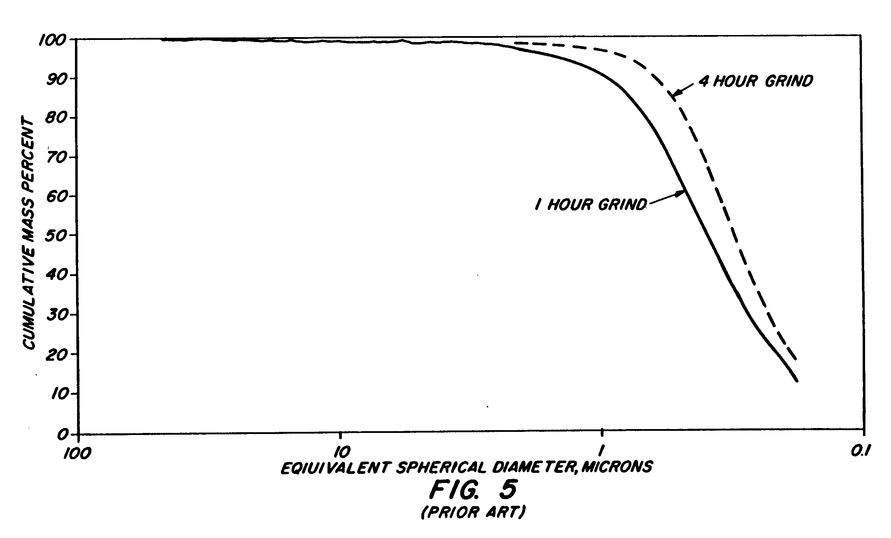

Figure 5 shows similar data for the unpromoted sample calcined at 1250°C. This material was very easy to grind compared with Example 1 but does not reach the fineness of the promoted samples.

### Example 4

This Example shows that powders prepared by calcination of gibbsite containing the promoter are excellent raw materials for high alumina ceramics. In order to reduce the effect of residual Na₂O, some of the gibbsite samples described in Example 3 were thermally decomposed by heating to 425°C, then leached with hot acetic acid at a pH of 5-6 thus lowering their Na₂O content. These materials were calcined for 2 hours at 1125°C and leached with water. After drying, Na₂O contents were found to be less than 0.01 wt% for all samples.

The samples were then ground for 4 hours, pressed into 2.54 cm (1-inch) diameter pellets having 0.64 cm (0.25-inch) thickness at a pressure of 34.5 mPa (5000 psi) in a double piston mold and sintered for 1 hour at 1400°C. After sintering, bulk densities of these samples were found to be 97.5, 96.5, and 95.2% of theoretical density (3.99 g/cc) for promoter levels of 5.0, 0.2, and 0.01 wt%, respectively. For unpromoted alumina, a sintering temperature more than 100°C higher would be required to achieve comparable densities. One example of an unpromoted alpha alumina is available from Aluminium Company of America under the trademark A-16 SG. Because of the low sintering temperature, the median fired grain size of these samples was only about 1 micron. The combination of high density and small grain size in an alumina ceramic is very desirable for improved mechanical properties and surface finish.

### Example 5

This Example shows the effect of calcining unpromoted gibbsite particles together with an aluminum fluoride mineralizer.

A commercial gibbsite, sold by Aluminum Company of America under the trademark HYDRAL 710, has an average particle size of approximately 1 micron. The gibbsite was calcined at 1300°C with 0.25 wt% aluminum fluoride in a static furnace. The resulting product consisted of alpha alumina particles having an average crystallite size of approximately 3 microns.

### Example 6

Example 5 was repeated, using a commercially available gibbsite sold by Aluminum Company of America under the trademark HYDRAL 705. Average particle size of this gibbsite is approximately 0.5 micron. The resulting alpha alumina product had an average crystallite size of about 4.5 microns.

The crystallite sizes obtained in Examples 5 and 6 are typical of commercially available alpha aluminas prepared by calcination in the presence of a mineralizer.

### Example 7

A gibbsite material having average particle size of about 0.8 micron was prepared by precipitation from sodium aluminate liquor in the presence of alpha alumina promoter particles. The promoter particles had a median particle size of about 0.3 micron and amounted to 1.5 wt% (Al₂O₃ basis) of the precipitated sample.

The precipitated promoted gibbsite was dried and then calcined at 1300°C with 0.25 wt% added aluminum fluoride in a static furnace. The resulting platelets had an average particle size (maximum dimension) of about 1 micron. The platelets had a well defined plate-like appearance with rounded corners.

### Example 8

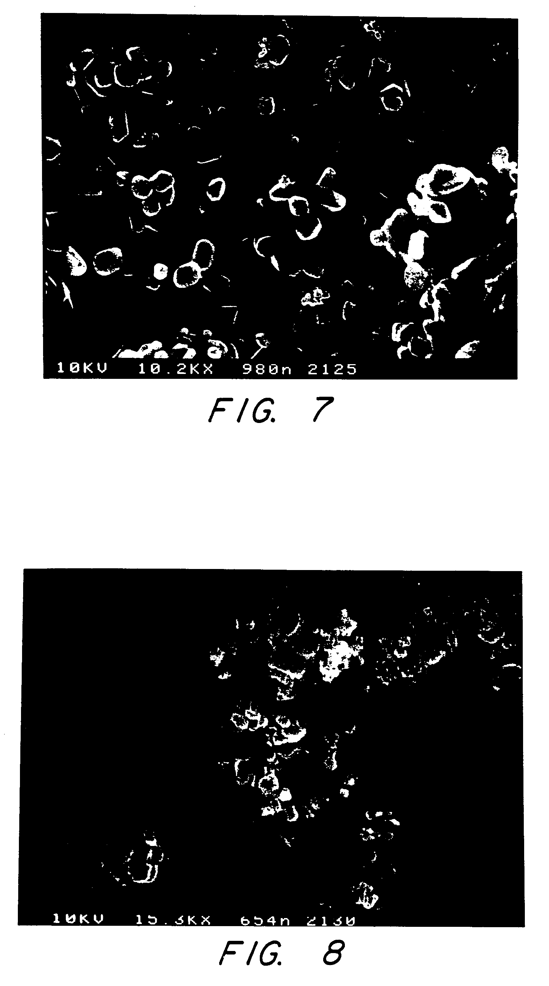

The promoted gibbsite of Example 7 was dried out and then calcined with 0.25 wt% added aluminum fluoride mineralizer in a gas-fired rotary kiln having a hot end temperature of 1200-1250°C. The resulting platelets had an average particle size (maximum dimension) below 1 micron. As shown in the electron microphotograph of Figure 7 taken at 10,200X magnification, the resulting alpha alumina platelets had a median particle size below 1 micron with well-defined plate-like crystals. The platelets had an average aspect ratio of about 4. As used herein, the term "aspect ratio" is defined as the largest dimension of a particle divided by its smallest dimension (thickness). Aspect ratio of platelets made by the process of the present invention is generally about 2-5, preferably about 3-5.

### Example 9

Example 8 was repeated, without adding any mineralizer in the calcination step. The resulting product is shown at 15,300X in Figure 8 as a very fine crystalline product which lacks the well-defined plate-like appearance of Figure 7.

## Claims

1. An economical process for producing particles of alpha alumina having a plate-like shape, comprising the steps of:
(a) providing an aqueous aluminate solution containing 50-400 g/l caustic soda and 0.50-0.80 grams Al₂O₃ per gram of caustic soda;
(b) treating the aqueous aluminate solution with alumina hydrate seed material and a promoter comprising particles of alpha alumina thereby to precipitate from the aqueous aluminate solution alumina hydrate particles containing the promoter particles, the alumina hydrate particles comprising agglomerated crystals, the agglomerates having a diameter such that they may be comminuted by grinding to an average particle size of less than one µm;
(c) separating the precipitated alumina hydrate particles from the aqueous aluminate solution;
(d) drying said alumina hydrate particles; and
(e) calcining said alumina hydrate particles in the presence of a chlorine or fluoride, chloride-or boron-containing mineralizer to produce particles comprising predominantly alpha alumina.

2. The process according to claim 1, wherein said mineralizer is selected from the group consisting of aluminum fluoride, ammonium fluoride, aluminum chloride, ammonium chloride, chlorine, hydrochloric acid, boric oxide, boric acid, and mixtures thereof.

3. The process according to claim 1, wherein said mineralizer comprises aluminum fluoride.

4. The process according to claim 1, wherein said mineralizer comprises 0.15-2 wt% of the alumina hydrate particles.

5. The process according to claim 1 further comprising:
(f) comminuting said predominantly alpha alumina particles to an average particle size of less than 1.5 µm.

6. The process according to claim 1 wherein said alpha alumina promoter comprises 0.01-10 wt.% of the Al₂O₃ content of the precipitated alumina hydrate particles.

7. The process according to claim 1 wherein said alumina hydrate seed material comprises alumina trihydrate particles.

8. The process according to claim 1 wherein the aqueous aluminate solution in step (a) has a temperature of 20-100°C and the alumina hydrate particles precipitated in step (b) comprise alumina trihydrate.

9. The process according to claim 8, wherein step (b) further comprises cooling said aqueous aluminate solution.

10. The process according to claim 1, wherein said alpha alumina promoter comprises particles having an average size of less than 1 µm.

11. A process for producing particles of alpha alumina having a plate-like shape, said process comprising the steps of:
(a) providing an aqueous aluminate solution containing 50-400 g/l caustic soda and 0.50-0.80 grams Al₂O₃ per gram of caustic soda;
(b) treating the aqueous aluminate solution at a temperature of 40-100°C with alumina hydrate seed material and a promoter comprising particles of alpha alumina having an average particle size of less than 1 µm, thereby to precipitate from the aqueous aluminate solution alumina hydrate particles containing the alpha alumina promoter;
(c) separating the precipitated alumina hydrate particles from the aqueous aluminate solution;
(d) drying said alumina hydrate particles; and
(e) calcining said alumina hydrate particles in the presence of a mineralizer selected from the group consisting of boric oxide, boric acid, aluminum fluoride, aluminum chloride, ammonium fluoride, ammonium chloride, chlorine, hydrochloric acid, and mixtures thereof, thereby producing alpha alumina particles having a plate-like shape.

12. The process according to claim 11, wherein said mineralizer comprises aluminum fluoride.

13. The process according to claim 11, wherein said mineralizer comprises 0.15-2 wt% of the alumina hydrate particles.

14. The process according claim 11, wherein said alpha alumina promoter comprises 0.01-10 wt% of the Al₂O₃ content of the precipitated alumina hydrate particles.

15. The process according to claim 1, wherein the agglomerates have a median diameter of about 25 µm.

16. An economical process for producing particles of alpha alumina having a plate-like shape, comprising the steps of:
(a) providing an aqueous aluminate solution containing 50-400 g/l caustic soda and 0.50-0.80 grams Al₂O₃ per gram of caustic soda;
(b) treating the aqueous aluminate solution with alumina hydrate seed material and a promoter comprising particles of alpha alumina, thereby to precipitate from the aqueous aluminate solution alumina hydrate particles containing the alpha alumina promoter;
(c) separating the precipitated alumina hydrate particles from the aqueous aluminate solution;
(d) drying said alumina hydrate particles; and
(e) calcining said alumina hydrate particles in the presence of a chlorine- or fluoride-, chloride- or boron-containing mineralizer to produce particles comprising predominantly alpha alumina.

17. Alpha alumina particles made by the process of claim 11, said particles having an average particle size of less 1.5 µm.

18. Alpha alumina particles having a plate-like shape and an average size of less than 1.5 µm.

19. Alpha alumina particles in accordance with claim 17, having an average size of less than about 1 µm.

20. Alpha alumina particles in accordance with claim 18, having an aspect ratio of about 2-5.

21. Alumina hydrate particles having a plate-like shape containing a promoter comprising particles of alpha alumina, said alumina hydrate particles comprising agglomerated crystals, the agglomerates having a diameter such that they may be comminuted by grinding to an average particle size of less than 1 µm.

22. Alumina hydrate particles as claimed in claims 21, having a median diameter of about 25 µm.

23. Alumina hydrate particles as claimed in claim 21, said crystals comprising gibbsite.

24. Alumina hydrate particles as claimed in claims 21, said alumina hydrate particles being further characterized by an ability of its α-calcined form to be ground more easily as compared to that obtained from alumina hydrate particles lacking said promoter.

25. Alumina hydrate particles as claimed in claims 21, said alumina hydrate particles being further characterized by an ability of its α-calcined form to be ground to a product wherein 95% of the product is less than one µm particle size in a grinding time significantly less than 16 hours.

## Patentansprüche

1. Verfahren zur wirtschaftlichen Herstellung von Partikeln aus alpha-Aluminiumoxid mit einer plättchenähnlichen Form, umfassend die Schritte:
(a) Bereitstellen einer wässrigen Aluminat-Lösung, die 50 ... 400 g/l Ätznatron und 0,50 ... 0,80 Gramm Al₂O₃ pro Gramm Ätznatron enthält;
(b) Behandeln der wässrigen Aluminat-Lösung mit Aluminiumoxidhydrat-Keimbildner und einem Aktivator, umfassend Partikel aus alpha-Aluminiumoxid, um dadurch aus der wässrigen Aluminat-Lösung Aluminiumoxidhydrat-Partikel auszufällen, welche die Aktivatorpartikel enthalten, wobei die Aluminiumoxidhydrat-Partikel agglomerierte Kristalle aufweisen und die Agglomerate einen solchen Durchmesser haben, daß sie durch Mahlen auf eine mittlere Partikelgröße von weniger als einen Mikrometer zerkleinert werden können;
(c) Abtrennen der ausgefällten Aluminiumoxidhydrat-Partikel von der wässrigen Aluminat-Lösung;
(d) Trocknen der Aluminiumoxidhydrat-Partikel; sowie
(e) Calcinieren der Aluminiumoxidhydrat-Partikel in Gegenwart eines Kristallisators, der Chlor oder Fluor, Chlorid oder Bor enthält, um Partikel zu erzeugen, die überwiegend alpha-Aluminiumoxid aufweisen.

2. Verfahren nach Anspruch 1, bei welchem der Kristallisator ausgewählt wird aus der Gruppe, bestehend aus Aluminiumfluorid, Ammoniumfluorid, Aluminiumchlorid, Ammoniumchlorid, Chlor, Chlorwasserstoffsäure, Bortrioxid, Borsäure und Mischungen davon.

3. Verfahren nach Anspruch 1, bei welchem der Kristallisator Aluminiumchlorid umfaßt.

4. Verfahren nach Anspruch 1, bei welchem der Kristallisator 0,15 % ... 2 Gewichtsprozent der Aluminiumoxidhydrat-Partikel umfaßt.

5. Verfahren nach Anspruch 1, ferner umfassend:
(f) Zerkleinern der Partikel, die überwiegend alpha-Aluminiumoxid sind, zu einer mittleren Partikelgröße von weniger als 1,5 Mikrometer.

6. Verfahren nach Anspruch 1, bei welchem der alpha-Aluminiumoxid-Aktivator 0,01 % ... 10 Gewichtsprozent des Al₂O₃-Gehalts der ausgefällten Aluminiumoxidhydrat-Partikel umfaßt.

7. Verfahren nach Anspruch 1, bei welchem der Aluminiumoxidhydrat-Keimbildner Aluminiumoxidtrihydrat-Partikel umfaßt.

8. Verfahren nach Anspruch 1, bei welchem die wässrige Aluminat-Lösung in Schritt (a) eine Temperatur von 20 ° ... 100 °C hat und die in Schritt (b) ausgefällten Aluminiumoxidhydrat-Partikel Aluminiumoxidtrihydrat-Partikel umfassen.

9. Verfahren nach Anspruch 8, bei welchem Schritt (b) ferner Kühlen der wässrigen Aluminat-Lösung umfaßt.

10. Verfahren nach Anspruch 1, bei welchem der alpha-Aluminiumoxid-Aktivator Partikel einer mittleren Partikelgröße kleiner als 1 Mikrometer umfaßt.

11. Verfahren zur Herstellung von Partikeln aus alpha-Aluminiumoxid mit einer plättchenähnlichen Form, umfassend die Schritte:
(a) Bereitstellen einer wässrigen Aluminat-Lösung, die 50 ... 400 g/l Ätznatron und 0,50 ... 0,80 Gramm Al₂O₃ pro Gramm Ätznatron enthält;
(b) Behandeln der wässrigen Aluminat-Lösung bei einer Temperatur von 40 ° ... 100 °C mit Aluminiumoxidhydrat-Keimbildner und einem Aktivator, umfassend Partikel als alpha-Aluminiumoxid einer mittleren Partikelgröße von weniger als einem Mikrometer, um dadurch aus der wässrigen Aluminat-Lösung Aluminiumoxidhydrat-Partikel auszufällen, welche den alpha-Aluminiumoxid-Aktivator enthalten.
(c) Abtrennen der ausgefällten Aluminiumoxidhydrat-Partikel von der wässrigen Aluminat-Lösung;
(d) Trocknen der Aluminiumoxidhydrat-Partikel; sowie
(e) Calcinieren der Aluminiumoxidhydrat-Partikel in Gegenwart eines Kristallisators, ausgewählt aus der Gruppe, bestehend aus Bortrioxid, Borsäure, Aluminiumfluorid, Aluminiumchlorid, Ammoniumfluorid, Ammoniumchlorid, Chlor, Chlorwasserstoffsäure, und Mischungen davon, um dadurch alpha-Aluminiumoxid-Partikel mit einer plättchenähnlichen Form zu erzeugen.

12. Verfahren nach Anspruch 11, bei welchem der Kristallisator Aluminiumfluorid umfaßt.

13. Verfahren nach Anspruch 11, bei welchem der Kristallisator 0,15 % ... 2 Gewichtsprozent der Aluminiumoxidhydrat-Partikel umfaßt.

14. Verfahren nach Anspruch 11, bei welchem der alpha-Aluminiumoxid-Aktivator 0,01 % ... 10 Gewichtsprozent des Al₂O₃-Gehalts der ausgefällten Aluminiumoxidhydrat-Partikel umfaßt.

15. Verfahren nach Anspruch 1, bei welchem die Agglomerate einen mittleren Durchmesser von etwa 25 Mikrometer haben.

16. Verfahren zur wirtschaftlichen Herstellung von Partikeln aus alpha-Aluminiumoxid mit einer plättchenähnlichen Form, umfassend die Schritte:
(a) Bereitstellen einer wässrigen Aluminat-Lösung, die 50 ... 400 g/l Ätznatron und 0,50 ... 0,80 Gramm Al₂O₃ pro Gramm Ätznatron enthält;
(b) Behandeln der wässrigen Aluminat-Lösung mit Aluminiumoxidhydrat-Keimbildner und einem Aktivator, umfassend Partikel aus alpha-Aluminiumoxid, um dadurch aus der wässrigen Aluminat-Lösung Aluminiumoxidhydrat-Partikel auszufällen, die den alpha-Aluminiumoxid-Aktivator enthalten;
(c) Abtrennen der ausgefällten Aluminiumoxidhydrat-Partikel von der wässrigen Aluminat-Lösung;
(d) Trocknen der Aluminiumoxidhydrat-Partikel; sowie
(e) Calcinieren der Aluminiumoxidhydrat-Partikel in Gegenwart eines Kristallisators, der Chlor oder Fluor, Chlorid oder Bor enthält, um Partikel zu erzeugen, die überwiegend alpha-Aluminiumoxid aufweisen.

17. Alpha-Aluminiumoxid-Partikel nach dem Verfahren nach Anspruch 11, welche Partikel eine mittlere Partikelgröße kleiner als 1,5 Mikrometer haben.

18. Alpha-Aluminiumoxid-Partikel mit plättchenähnlicher Form und einer mittleren Partikelgröße kleiner als 1,5 Mikrometer.

19. Alpha-Aluminiumoxid-Partikel nach Anspruch 17 mit einer mittleren Partikelgröße kleiner als etwa einen Mikrometer.

20. Alpha-Aluminiumoxid-Partikel nach Anspruch 18 mit einem Höhen-Breiten-Verhältnis von 2 ... 5.

21. Aluminiumoxidhydrat-Partikel mit plättchenähnlicher Form, die einen Aktivator enthalten, der Partikel aus alpha-Aluminiumoxid umfaßt, welche alpha-Aluminiumoxidhydrat-Partikel agglomerierte Kristalle umfassen und welche Agglomerate einen solchen Durchmesser haben, daß sie durch Mahlen auf eine mittlere Partikelgröße von weniger als einen Mikrometer zerkleinert werden können.

22. Aluminiumoxidhydrat-Partikel nach Anspruch 21 mit einem mittleren Durchmesser von etwa 25 Mikrometer.

23. Aluminiumoxidhydrat-Partikel nach Anspruch 21, wobei die Kristalle Gibbsit umfassen.

24. Aluminiumoxidhydrat-Partikel nach Anspruch 21, welche Aluminiumoxidhydrat-Partikel ferner dadurch gekennzeichnet sind, daß ihre α-calcinierte Form leichter gemahlen werden kann als diejenige, die aus Aluminiumoxidhydrat-Partikeln erhalten werden, denen es an Aktivator mangelt.

25. Aluminiumoxidhydrat-Partikel nach Anspruch 21, welche Aluminiumoxidhydrat-Partikel ferner dadurch gekennzeichnet sind, daß ihre α-calcinierte Form innerhalb einer Mahldauer von wesentlich kürzer als 16 Stunden zu einem Produkt gemahlen werden kann, in welchem 95 % des Produkts eine kleinere Partikelgröße als 1 Mikrometer haben.

## Revendications

1. Procédé économique de production de particules d'α-alumine en forme de plaque, comprenant les étapes consistant à :
(a) prévoir une solution aqueuse d'aluminate contenant 50 à 400 g/l de soude caustique et 0,50 à 0,80 g de Al₂O₃ par gramme de soude caustique ;
(b) traiter la solution aqueuse d'aluminate par un matériau d'ensemencement de type alumine hydratée et un activateur comprenant des particules d'α-alumine, pour ainsi précipiter dans la solution aqueuse d'aluminate des particules d'alumine hydratée contenant les particules d'activateur, les particules d'alumine hydratée comprenant des cristaux agglomérés, les agglomérats ayant un diamètre tel qu'ils peuvent être réduits par broyage à une dimension moyenne de particule inférieure à 1 µm ;
(c) séparer les particules d'alumine hydratée précipitées de la solution aqueuse d'aluminate ;
(d) sécher lesdites particules d'alumine hydratée et
(e) calciner lesdites particules d'alumine hydratée en présence d'un minéralisateur contenant du chlore ou du fluorure, du chlorure ou du bore pour produire des particules comprenant essentiellement de l'α-alumine.

2. Procédé selon la revendication 1, dans lequel ledit minéralisateur est sélectionné dans le groupe constitué par le fluorure d'aluminium, le fluorure d'ammonium, le chlorure d'aluminium, le chlorure d'ammonium, le chlore, l'acide chlorhydrique, l'anhydride borique, l'acide borique et leurs mélanges.

3. Procédé selon la revendication 1, dans lequel ledit minéralisateur comprend du fluorure d'aluminium.

4. Procédé selon la revendication 1, dans lequel ledit minéralisateur représente 0,15 à 2 % en poids des particules d'alumine hydratée.

5. Procédé selon la revendication 1, comprenant en outre l'étape consistant à :
(f) réduire lesdites particules essentiellement d'α-alumine à une dimension moyenne de particule inférieure à 1,5 µm.

6. Procédé selon la revendication 1, dans lequel ledit activateur α-alumine représente 0,01 à 10 % en poids de la teneur en Al₂O₃ des particules d'alumine hydratée précipitées.

7. Procédé selon la revendication 1, dans lequel ledit matériau d'ensemencement de type alumine hydratée comprend des particules d'alumine trihydratée.

8. Procédé selon la revendication 1, dans lequel la solution aqueuse d'aluminate de l'étape (a) a une température de 20 à 100°C et les particules d'alumine hydratée précipitées de l'étape (b) comprennent de l'alumine trihydratée.

9. Procédé selon la revendication 8, dans lequel l'étape (b) comprend en outre le refroidissement de ladite solution aqueuse d'aluminate.

10. Procédé selon la revendication 1, dans lequel ledit activateur α-alumine comprend des particules ayant une dimension moyenne inférieure à 1 µm.

11. Procédé de production de particules d'α-alumine en forme de plaque, ledit procédé comprenant les étapes consistant à :
(a) prévoir une solution aqueuse d'aluminate contenant 50 à 400 g/l de soude caustique et 0,50 à 0,80 g de Al₂O₃ par gramme de soude caustique ;
(b) traiter la solution aqueuse d'aluminate à une température de 40 à 100°C par du matériau d'ensemencement de type alumine hydratée et un activateur comprenant des particules d'α-alumine ayant une dimension moyenne de particule inférieure à 1 µm, pour ainsi précipiter dans la solution aqueuse d'aluminate des particules d'alumine hydratée contenant l'activateur α-alumine ;
(c) séparer les particules d'alumine hydratée précipitées de la solution aqueuse d'aluminate ;
(d) sécher lesdites particules d'alumine hydratée et
(e) calciner lesdites particules d'alumine hydratée en présence d'un minéralisateur sélectionné dans le groupe constitué par l'anhydride borique, l'acide borique, le fluorure d'aluminium, le chlorure d'aluminium, le fluorure d'ammonium, le chlorure d'ammonium, le chlore, l'acide chlorhydrique et leurs mélanges, en produisant ainsi des particules d'α-alumine en forme de plaque.

12. Procédé selon la revendication 11, dans lequel ledit minéralisateur comprend du fluorure d'aluminium.

13. Procédé selon la revendication 11, dans lequel ledit minéralisateur représente de 0,15 à 2 % en poids des particules d'alumine hydratée.

14. Procédé selon la revendication 11, dans lequel ledit activateur de type α-alumine représente de 0,01 à 10 % en poids de la teneur en Al₂O₃ des particules d'alumine hydratée précipitées.

15. Procédé selon la revendication 1, dans lequel les agglomérats ont un diamètre médian d'environ 25 µm.

16. Procédé économique de production de particules d'α-alumine en forme de plaque, comprenant les étapes consistant à :
(a) prévoir une solution aqueuse d'aluminate contenant 50 à 400 g/l de soude caustique et 0,50 à 0,80 g de Al₂O₃ par gramme de soude caustique ;
(b) traiter la solution aqueuse d'aluminate par un matériau d'ensemencement de type alumine hydratée et un promoteur comprenant des particules d'α-alumine, pour ainsi précipiter dans la solution aqueuse d'aluminate des particules d'alumine hydratée contenant l'activateur α-alumine ;
(c) séparer les particules d'alumine hydratée précipitées de la solution aqueuse d'aluminate ;
(d) sécher lesdites particules d'alumine hydratée et
(e) calciner lesdites particules d'alumine hydratée en présence d'un minéralisateur contenant du chlore ou du fluorure, du chlorure ou du bore pour produire des particules comprenant essentiellement de l'α-alumine.

17. Particules d'α-alumine produites par le procédé selon la revendication 11, lesdites particules ayant une dimension moyenne de particule inférieure à 1,5 µm.

18. Particules d'α-alumine en forme de plaque et ayant une dimension moyenne inférieure à 1,5 µm.

19. Particules d'α-alumine selon la revendication 17, ayant une dimension moyenne inférieure à environ 1 µm.

20. Particules d'α-alumine selon la revendication 18, ayant un rapport de côtés d'environ 2 à 5.

21. Particules d'alumine hydratée en forme de plaque contenant un activateur comprenant des particules d'α-alumine, lesdites particules d'alumine hydratée comprenant des cristaux agglomérés, les agglomérats ayant un diamètre tel qu'ils peuvent être réduits par broyage à une dimension moyenne de particule inférieure à 1 µm.

22. Particules d'alumine hydratée selon la revendication 21, ayant un diamètre médian d'environ 25 µm.

23. Particules d'alumine hydratée selon la revendication 21, lesdits cristaux comprenant de la gibbsite.

24. Particules d'alumine hydratée selon la revendication 21, lesdites particules d'alumine hydratée étant en outre caractérisées par la capacité de leur forme α-calcinée à être broyée plus facilement que celle obtenue à partir de particules d'alumine hydratée dépourvues dudit activateur.

25. Particules d'alumine hydratée selon la revendication 21, lesdites particules d'alumine hydratée étant en outre caractérisées par la capacité de leur forme α-calcinée à être broyée en un produit dont 95 % ont une dimension de particule inférieure à 1 µm pour une durée de broyage sensiblement inférieure à 16 h.
